# EUROPEAN PATENT SPECIFICATION

(11) **EP 3 051 182 B1**
(45) Date of publication and mention of the grant of the patent: **28.02.2024**
(21) Application number: 16152072.1
(22) Date of filing: 20.01.2016
(51) Int. Cl.: B60W 30/19, B60W 10/08, B60K 6/44, B60K 6/48, B60K 6/52, B60W 10/10, B60W 30/20

(54) **MANAGEMENT AND CONTROL METHOD OF THE GEAR CHANGE PHASES OF A VEHICLE FITTED WITH AN AUTOMATED MANUAL TRANSMISSION AND TRANSMISSION APPARATUS FOR VEHICLES FITTED WITH AUTOMATED MANUAL TRANSMISSION**
STEUERUNGSVERFAHREN DER GANGWECHSELPHASEN EINES MIT EINEM AUTOMATISIERTEN SCHALTGETRIEBE AUSGESTATTETEN FAHRZEUGS UND GETRIEBEVORRICHTUNG FÜR MIT EINEM AUTOMATISIERTEN SCHALTGETRIEBE AUSGESTATTETEN FAHRZEUG
PROCÉDÉ DE GESTION ET DE COMMANDE DES PHASES DE CHANGEMENT DE VITESSES D'UN VÉHICULE ÉQUIPÉ D'UNE TRANSMISSION MANUELLE AUTOMATISÉE ET APPAREIL DE TRANSMISSION POUR VÉHICULES ÉQUIPÉS D'UN TEL SYSTÈME DE TRANSMISSION

(30) Priority: 28.01.2015 IT PD20150016
(43) Date of publication of application: 03.08.2016
(73) Proprietor: Marelli Europe S.p.A., 20011 Corbetta (MI) (IT)
(72) Inventor: DENTICI, Ignazio, I-20011 Corbetta, MILANO (IT); CIAMPOLINI, Franco, I-20011 Corbetta, MILANO (IT)
(74) Representative: Mitola, Marco

(56) References cited:
- EP-A1- 0 952 932
- EP-A1- 2 783 933
- FR-A1- 2 811 395
- US-A1- 2010 105 517
- US-A1- 2012 325 048
- US-B1- 6 574 535

## Description

### FIELD OF APPLICATION

The present invention relates to a method of managing the gear change phases of a vehicle with an automated manual transmission and a relative transmission apparatus for vehicles fitted with an automated manual transmission.

### STATE OF THE ART

As is known, hybrid vehicle architectures are multiple and differ substantially in terms of the position of the electric motor in relation to the powertrain.

The hybridisation of a vehicle can be achieved with different types of transmission, such as AT (manual transmission) DCT (dual clutch transmission), CVT (continuous variable transmission) or, in particular, AMT (automated manual transmission).

AMT is the transmission that ensures the best results in terms of CO2 cycle reduction, and also permits the transformation of the vehicle in HEV without the need to re-engineer the transmission.

The automated AMT transmission (Automated Manual Transmission) is currently the transmission which achieves the best results on the market in terms of reduction of CO2 and fuel consumption.

The AMT also improves the driving sensation optimising the opening and closing phases of the clutch, appropriately managed by a dedicated CU, thus controlling the transfer of torque from the engine to the transmission.

The main disadvantage of AMT is the torque gap generated during gear changing, a problem also present in manual transmissions MT, when the clutch stops the delivery of torque from the engine to the transmission, and the driver feels a torque reversal, from positive torque (supplied by the endothermic motor-ICE) to negative torque given by the friction of the transmission, the aerodynamic drag of the vehicle and the tyre rolling resistance of the vehicle.

This phase can last for up to 1 second and is thus clearly perceived by the driver and passengers as a variation of the longitudinal acceleration of the vehicle.

The prior solutions involving the use of a manual transmission or automated manual transmission fail to resolve this technical problem related to the perception of said deceleration.

In fact as regards automated manual transmissions, there are technical times of about 1 second needed for the servomechanisms to perform the various gear change phases, during which the engine cannot transmit torque to the drive wheels.

As for manual transmissions, the gear change times are related to the sensitivity and speed of the driver as well as the inherent speed of the manual transmission itself, fitted with its own synchronizers. In any case the driver and passengers, no matter how skilled and quick the driver is, have a clear perception of the gear change, especially when the change is performed at full acceleration of the vehicle or on inclined ground.

It is therefore known of, should one wish to achieve a continuous or 'seamless' gear change, to opt for different types of transmission, such as for example the aforementioned CVT or DCT.

The former however increase fuel consumption and pollutant emissions and the latter are far more expensive and complex to implement. An example of hybrid vehicle, implying a complex and expensive solution, is known from EP 2783933 A1 and US6574535B.

### PRESENTATION OF THE INVENTION

The need is therefore felt to resolve the drawbacks and limitations mentioned with reference to the prior art.

In particular, the need is felt in the art to solve the problems of perception of deceleration when changing gear in relation to an MT or AMT type transmission, so as not to forego the benefits of this type of transmission in terms of low fuel consumption, low emissions and low costs.

This requirement is satisfied by a management method of the gear change phases according to claim 1.

### DESCRIPTION OF THE DRAWINGS

Further characteristics and advantages of the present invention will be more clearly comprehensible from the description given below of its preferred and non-limiting embodiments, wherein:

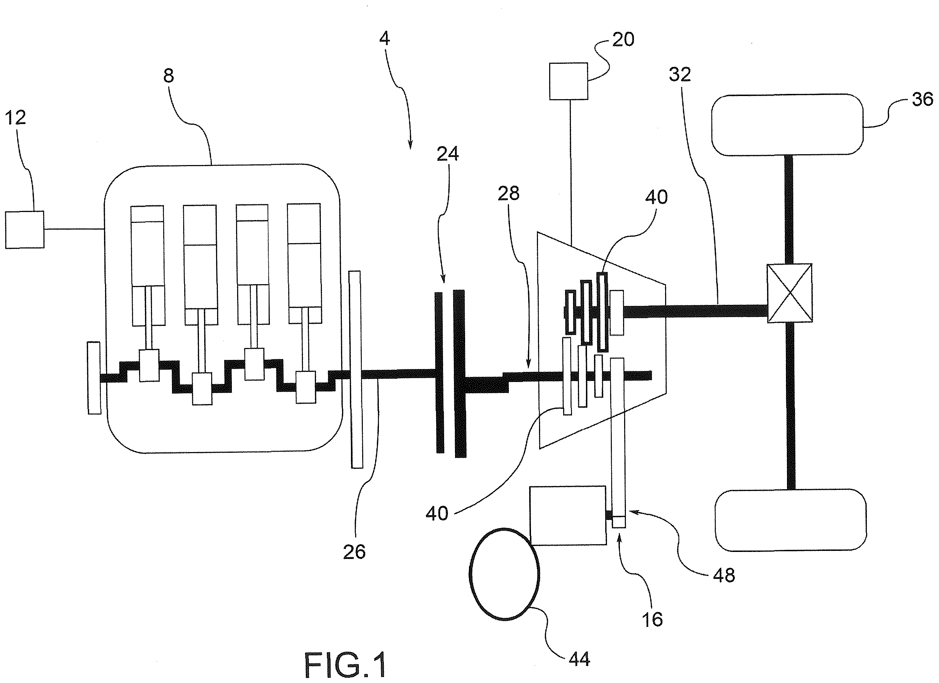

figure 1 shows a schematic view of a transmission apparatus according to one embodiment of the present invention;
figures 2a-2 c show diagrams of the main operating parameters of a transmission apparatus according to the present invention, during a gear change.

The elements or parts of elements common to the embodiments described below will be indicated using the same reference numerals.

### DETAILED DESCRIPTION

With reference to the aforementioned figures, reference numeral 4 globally denotes a schematic overall view of a transmission apparatus of a vehicle according to the present invention.

In particular, the transmission apparatus 4 for vehicles comprises an endothermic engine 8 fitted with an engine control unit 12, and an automated manual transmission 16, preferably said automated manual transmission being in turn fitted with a transmission control unit 20.

For the purpose of this invention the specific type of endothermic engine or the specific type of automated manual transmission is not relevant, 'automated transmission' being understood to be a type of transmission for automotive use in which the manual drives are replaced by automatic drives, such as for example hydraulic, electrical or electromechanical actuators, with particular reference to clutch engagement/disengagement operations and the engagement/disengagement of speed ratios.

The automated manual transmission 16 is fitted with a clutch 24 operatively connected to a crankshaft 26 of the engine 8, a primary shaft 28 operatively connected to the clutch 24, and a secondary shaft 32 operatively connected to the drive wheels 36 of the vehicle, wherein the primary and secondary shafts 28, 32 are provided with gears 40 meshing with each other in a plurality of gears.

The transmission control unit 20 is programmed to change gear in the following steps:
- a first step of opening or disengaging the clutch 24 so as to disconnect the engine 8 from the primary shaft 28,
- a second step of selecting and engaging a new gear, keeping the clutch 24 disengaged,
- a third step of engaging the clutch 24 to reconnect the crankshaft 26 with the primary shaft 28 of the transmission.

For example, the automated manual transmission 16 comprises electrical or electromechanical hydraulic actuators which disengage the previous gear inserted, by disconnecting the primary shaft 28 and the secondary shaft 32 by means of the gears 40, select the next gear and insert it, connecting the primary shaft 28 and the secondary shaft 32 to each other by means of said gears 40.

Advantageously, the transmission apparatus 4 comprises an electric machine 44 operatively connected to the primary shaft 28 by transmission means 48, said electric machine 44 being mechanically separate from the engine 8.

For the purposes of the present invention an electric machine is understood to be a machine which can function both as an engine, so as to receive electricity in input and provide mechanical energy in output, and as a generator, so as to receive mechanical energy in input and supply electricity in output, in the known manner. In addition, the electric machine, when functioning as a motor, can supply torque in both directions of rotation of the motor shaft, according to the drive received, in the known manner.

The transmission means 48 may be of any type and comprise mechanisms, gears, pulleys, belts, chains, linkages and the like. The electric motor 44 may also be integrated on the primary shaft 28 of the automated manual transmission 16 with an outer rotor or hollow shaft type solution.

Advantageously, the transmission control unit 20 is programmed to provide for the actuation of the electric machine 44 during at least one of said gear change steps, so as to supply torque to the secondary shaft 32 via the primary shaft 28 to counteract the reduction in speed of progress of the vehicle during said gear change.

In other words, when during the gear change phase the torque of the crankshaft 26 is not transmitted because the clutch 24 is disengaged, the vehicle tends to slow down due to a variety of forces opposing its progress, such as friction inside the transmission, the rolling resistance of the tyres, the aerodynamic drag of the vehicle, the incline of the ground and so on.

This tendency to slow down is countered and compensated by the intervention of the electric machine 44 during at least one of said gear change phases.

According to a possible embodiment, during the first gear change step, the electric machine 44 delivers to the primary shaft 28 a torque which adds to the torque supplied by the engine 8 to the primary shaft 28, during the opening step of the clutch 24.

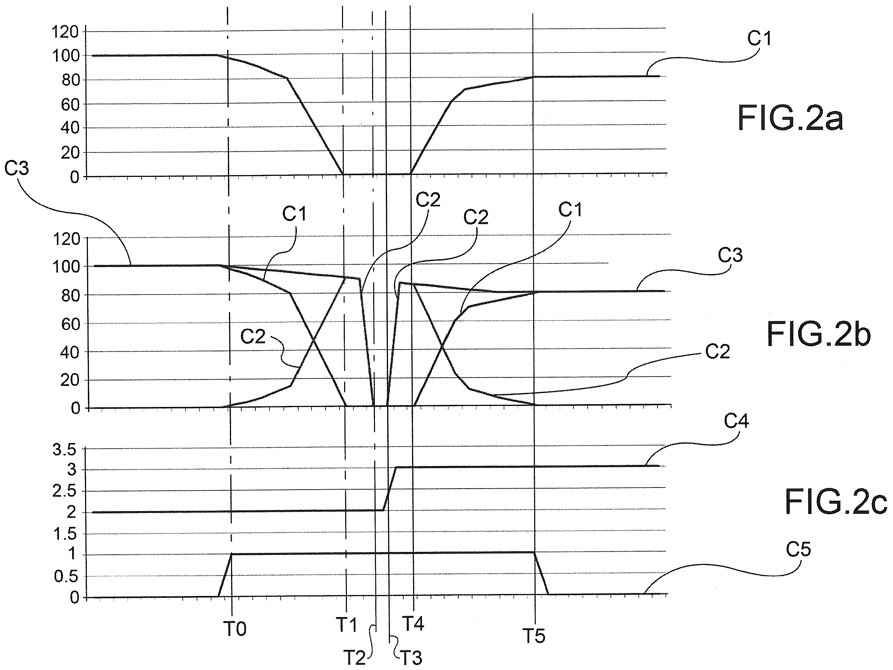

For example, in figure 2 the first phase of the gear change is between the instants in time T0 and T1.

In said figures C1 represents the trend of the torque supplied by the engine 8 to the drive wheels 36, C2 represents the torque provided by the electric machine 44 to the drive wheels 36 and C3 represents the overall torque supplied to the drive wheels 36, as the sum of the contributions made by the engine 8 and by the electric machine 44, i.e. C3 = C1 + C2.

In particular, during the first gear change step, the electric machine 44 delivers to the primary shaft 28 an increasing torque, substantially equal to the reduction in torque supplied by the engine 8 to the primary shaft 28, caused by the opening of the clutch 24.

For example, the torque to the primary shaft 28 supplied by the electric machine 44 during the first step of the gear change is inversely proportional to the torque transmitted by the engine 8.

According to one embodiment, in the first step of the gear change, the trends of the torque supplied to the primary shaft 28 by the engine 8 and by the electric machine 44 are substantially linear trends.

At the end of the first step of the gear change, i.e. at T1 the torque supplied by the engine 8 to the primary shaft 28 is zero, and the torque supplied by the electric machine 44 to the primary shaft 28 is substantially equal to the torque generated by the engine 8 at the beginning of the first step, i.e. at T0.

The second phase of the gear change is divided into an initial phase, in which the electric machine 44 supplies torque to the primary shaft 28 while the engine does not provide torque to the primary shaft 28.

Said initial phase is between the instants in time T1 and T2.

There is then an intermediate phase in which actuators of the automated manual transmission 16 disengage the previous gear inserted, select the next gear and insert it; in said intermediate phase, represented between the instants in time T2 and T3, the electric machine 44 does not provide torque to the primary shaft 28.

Lastly, there is a final phase in which the electrical machine 44 provides torque to the primary shaft 28 while the engine 8 does not provide torque to the primary shaft 28, the clutch 24 being disengaged; said final phase is represented between the instants in time T3 and T4.

Preferably, at the beginning and the end of the intermediate step, the electric machine 44 supplies the primary shaft 28 with a torque substantially equal to the torque generated by the engine 8 at the beginning of the first step of the gear change. In other words the torque supplied to the primary shaft 28 by the electric machine 44 at time T1 is substantially equal to the torque supplied to the primary shaft 28 by the electric machine 44 at time T4.

During the third step of the gear change, the electric machine 44 delivers to the primary shaft 28 a torque which adds to the contribution of torque supplied by the engine 8 to the primary shaft 28, by the engagement of the clutch 24. Said third gear change phase is between the instants in time T4 and T5.

According to one embodiment, during the third step of the gear change, the electric machine 44 delivers to the primary shaft 28 a torque which decreases by a value substantially equal to the increase of the contribution of torque supplied by the engine 8 to the primary shaft 28, due to the closure of the clutch 24.

For example, the torque to the primary shaft 28 supplied by the electric machine 44 during the third step of the gear change is inversely proportional to the torque transmitted by the engine 8.

At the end of the third step of the gear change, the torque supplied by the electric machine 44 to the primary shaft 28 is zero, and the power supplied by the engine 8 to the primary shaft 28 is substantially equal to the power delivered by it at the beginning of the first step, depending on the torque demand of the user.

In the appended drawings, there is a slight variation of torque precisely because, for the same power, by changing the gear ratio i.e. the gear engaged, the torque must be changed accordingly.

In other words, according to one embodiment, the power supplied by the engine 8 to the primary shaft 28 at T5 is substantially equal to that provided by the same engine at time T0.

According to one embodiment, the discharge and increase curves of the torque transmitted to the primary transmission shaft 28 by the engine 8 and the electric machine 44, respectively, during the first and the third steps of the gear change, are substantially symmetrical to each other.

In other words, the torque curves provided by the engine and the electric machine in the interval between T0 and T1 are substantially symmetrical to the torque curves provided by them in the interval between T4 and T5.

Figure 2c lastly shows the meshing phases of the new gear according to the present invention (curve C4) and in relation to a conventional type meshing phase (curve C5).

The gear change phases described above are managed by the engine control unit 12 and by the transmission control unit 20.

In particular, said units 12, 20 are operationally connected to each other to synchronise the actuation of the engine 8, 16 of the automated manual transmission 16 and of the electric machine 44 when changing gear.

For example, during the gear change steps, the engine control unit 12 operates a cut or an increase in power to provide the primary shaft 28 with the torque transmittable by the clutch 44 depending on the demand made by the user and on the working condition of said clutch 44, said cut or power increase being performed by acting on the spark advance of one or more cylinders of the endothermic engine, and/or modification of the suction and/or discharge parameters of one or more cylinders of the endothermic engine.

For example, the engine control unit 12 performs a power cut in the interval between T0 and T1, and operates a subsequent power increase in the interval between T4 and T5.

The transmission control unit 20 controls the automated manual transmission 16 by means of hydraulic, electric or electromechanical actuators which disengage the previous gear inserted, by disconnecting the primary shaft 28 and the secondary shaft 32 from each other, select the next gear and insert it, connecting the primary shaft 28 and the secondary shaft 32.

According to a possible embodiment of the present invention, the electric machine 44, when no gear changes are being made, is used as a generator, recovering kinetic energy from the vehicle and recharging a battery of the endothermic engine 8 and/or any electrical utilities of the vehicle.

As may be appreciated from the above description, the present invention makes it possible to overcome the drawbacks and limitations mentioned with reference to the prior art.

As seen the architecture presented in this patent provides for the use of an electric motor connected, if necessary by suitable transmission means, such as a reduction mechanism or directly by means of an outer rotor solution or a hollow shaft solution, to the primary transmission shaft, downstream of the clutch connecting the endothermic engine to said shaft.

This architecture ensures all the typical functions of a "mild hybrid" vehicle, namely:
- Geared EV mode
- ICE restart
- Extended start and Stop
- E-boost function
- E-braking
- Cruising
   and also solves the main disadvantage of the AMT which is the torque gap when changing gear.

In fact, this architecture makes it possible to eliminate the perception by the driver of the torque gap while changing gear, reducing its duration to an interval that cannot be perceived by the driver as a reversal of the longitudinal acceleration of the vehicle. In fact, with a very short duration of the torque gap, the driver cannot perceive a reversal of the torque or a variation of the longitudinal acceleration of the vehicle, consequently the automated gear transmission function AMT becomes equivalent to that of an automatic transmission AT or DCT (dual-clutch) gearbox, with considerable advantages, compared to the latter, in terms of cost and reduction of CO2 emission /fuel consumption.

The patent presents a system architecture that, using an electric motor connected to the primary shaft of the AMT reduces the torque gap making it undetectable by the driver, and enhancing the driving sensation, making it substantially equivalent to an automatic transmission. In fact the gap is not entirely eliminated, being present at the stage of inserting the new gear, but is reduced to a sufficiently short interval of time as not to be perceived by the driver or passengers, so as to give the feeling of continuity typical of a CVT type or even DCT (dual-clutch) transmission and AT (automatic transmission), while avoiding the drawbacks of this type of transmission in terms of consumption and pollution.

In addition, the electric motor on the primary shaft of the transmission provides some typical functions of hybrid vehicles, turning the ICE vehicle into HEV with further benefits as regards CO2 and fuel consumption.

Moreover, with this architecture, the actuation of the AMT may be both hydraulic and, especially, all-electric, a choice justified by the integration of an electric traction motor increasing the electrification of the powertrain.

In brief, the present invention improves the performance of an MT or AMT transmission making it a competitor of the automatic transmission, but with considerable savings in terms of CO2 emissions.

This way the invention allows the optimisation of an automated manual transmission so as to have gear change performance similar to that of continuously variable transmissions CVT or even dual clutch transmissions (DCTs), without sacrificing the low fuel consumption and low costs typical of an AMT transmission.

In addition, the invention also makes it possible to optimise a manual transmission (MT) in order to have gear change performance similar to that of continuously variable transmissions CVT or even dual clutch transmissions (DCTs), with even lower costs and consumption than those of an automated manual transmission (AMT).

Moreover, as seen, the insertion of an electric motor on the primary shaft of the transmission allows the transformation of the vehicle into a HEV (hybrid electric vehicle) with a lower delta cost compared to HEV architectures comparable in terms of performance.

Lastly, with this architecture the vehicle can have a full EV mode, which is a totally electric operating mode, compatibly with the mechanical power of the motor and the electric power available from the battery, taking advantage of the possibility of changing the ratios between the electric motor and the wheels.

A person skilled in the art may make numerous modifications and variations to the gear change methods and transmission apparatuses described above so as to satisfy contingent and specific requirements while remaining within the sphere of protection of the invention as defined by the following claims.

## Claims

1. Management and control method of the gear change phases of a vehicle fitted with an automated manual transmission (16),:
- said vehicle having an endothermic engine (8) with relative crankshaft (26), and an automated manual transmission (16) having a clutch, a primary shaft (28) operatively connected to the clutch (24), and a secondary shaft (32) operatively connected to the drive wheels (36) of the vehicle, wherein the primary and secondary shafts (28,32) are provided with gears (40) meshing with each other in a plurality of gears,
- the vehicle having an electric machine (44) operatively connected to the primary shaft (28) by transmission means (48), said electric machine (44) being mechanically separate from the engine (8),
- the gear change comprising:
- a first step of opening or disengaging the clutch (24) so as to disconnect the engine (8) from the primary shaft (28),
- a second step of selecting and engaging a new gear, keeping the clutch (24) disengaged,
- a third step of engaging the clutch (24) to reconnect the crankshaft (26) with the primary shaft (28) of the automated manual transmission (16),
**characterised by**
- providing for the actuation of the electric machine (44) during at least one of said gear change steps, so as to supply torque to the secondary shaft (32), via the primary shaft (28), to counteract the reduction in speed of progress of the vehicle during said gear change,
wherein the second step of the gear change is divided into an initial step, in which the electric machine (44) provides torque to the primary shaft (28) while the engine (8) does not provide torque to the primary shaft (28), an intermediate step in which actuators of the automated manual transmission (16) disengage the previous gear inserted, select and engage the next gear, wherein in said intermediate step, the electric machine (44) does not provide torque to the primary shaft (28), and a final step in which the electric machine (44) provides torque to the primary shaft (28) while the engine (8) does not provide torque to the primary shaft (28), the clutch (24) being disengaged.

2. Method according to claim 1, wherein during the first gear change step, the electric machine (44) delivers to the primary shaft (28) a torque which is added to the torque supplied by the engine (8) to the primary shaft (28) , during the opening step of the clutch.

3. Method according to claim 1 or 2, wherein during the first gear change step, the electric machine (44) delivers to the primary shaft (28) an increasing torque, substantially equal to the reduction in torque supplied by the engine (8) to the primary shaft (28), caused by the opening of the clutch (44).

4. Method according to any of the previous claims, wherein the torque to the primary shaft (28) supplied by the electric machine (44) during the first step of the gear change is inversely proportional to the torque transmitted by the engine (8).

5. Method according to any of the previous claims, wherein in the first step of the gear change, the trends of the torque supplied to the primary shaft (28) by the engine (8) and by the electric machine (44) are substantially linear trends.

6. Method according to any of the previous claims, wherein at the end of the first step of the gear change, the torque supplied by the engine (8) to the primary shaft (28) is zero, and the torque supplied by the electric machine (44) to the primary shaft (28) is substantially equal to the torque generated by the engine (8) at the beginning of the first step.

7. Method according to any of the previous claims, wherein at the beginning and the end of the intermediate step, the electric machine (44) supplies the primary shaft (28) with a torque substantially equal to the torque generated by the engine (8) at the beginning of the first step of the gear change.

8. Method according to any of the previous claims wherein during the third step of the gear change, the electric machine (44) delivers to the primary shaft (28) a torque which adds to the contribution of torque supplied by the engine (8) to the primary shaft (28), by the engagement of the clutch (24).

9. Method according to any of the previous claims, wherein during the third step of the gear change, the electric machine (44) delivers to the primary shaft (28) a torque which decreases to a value substantially equal to the increase of the contribution of torque supplied by the engine (8) to the primary shaft (28), due to the closure of the clutch (24).

10. Method according to any of the previous claims, wherein the torque to the primary shaft (28) supplied by the electric machine (44) during the third step of the gear change is inversely proportional to the torque transmitted by the engine (8).

11. Method according to any of the previous claims, wherein, at the end of the third step of the gear change, the torque supplied by the electric machine (44) to the primary shaft (28) is zero, and the power supplied by the engine (8) to the primary shaft (28) is substantially equal to the power delivered thereby at the beginning of the first step, depending on the torque demand of the user.

12. Method according to any of the previous claims, wherein the discharge and increase curves of the torque transmitted to the primary transmission shaft (28) by the engine (8) and the electric machine (44), respectively, during the first and the third steps of the gear change, are substantially symmetrical to each other.

13. Method according to any of the previous claims, wherein the endothermic engine (8) is provided with an engine control unit (12) depending on the torque demand made by the user, the automated manual transmission (16) is provided with a transmission control unit (20), wherein said control units (12,20) are operatively connected to each other to synchronize the actuation of the engine (8), of the automated manual transmission (16) and of the electric machine (44) during the gear change.

14. Method according to claim 13, wherein during the gear change steps, the engine control unit (12) operates a cut or an increase in power to provide the primary shaft (28) with the torque transmittable by the clutch (24) depending on the demand made by the user and on the working condition of said clutch (24), said cut or power increase being performed by acting on the spark advance of one or more cylinders of the endothermic engine (8), and/or modification of the suction and/or discharge parameters of one or more cylinders of the endothermic engine (8).

15. Method according to any of the previous claims, wherein the automated manual transmission (16) comprises electrical or electromechanical actuators which disengage the previous gear inserted, by disconnecting the primary shaft (28) and the secondary shaft (32) from each other, select the next gear and insert it, connecting the primary shaft (28) and the secondary shaft (32).

16. Method according to any of the previous claims, wherein the electric machine (44), when no gear changes are being made, is used as a generator, recovering kinetic energy from the vehicle and recharging a battery of the endothermic engine (8) and/or any electrical utilities of the vehicle.

17. Method according to any of the previous claims, wherein said transmission means (48) comprise a kinematism, or an outer rotor solution or a hollow shaft solution.

## Patentansprüche

1. Verwaltungs- und Steuerverfahren der Gangwechselphasen eines Fahrzeugs, das mit einem Automatik-Schaltgetriebe (16) ausgestattet ist:
- wobei das Fahrzeug eine Brennkraftmaschine (8) mit einer entsprechenden Kurbelwelle (26) und einem Automatik-Schaltgetriebe (16) mit einer Kupplung, einer Primärwelle (28), die mit der Kupplung (24) in Wirkverbindung steht, und einer Sekundärwelle (32), die mit den Antriebsrädern (36) des Fahrzeugs in Wirkverbindung steht, aufweist, wobei die Primär- und Sekundärwellen (28, 32) mit Zahnrädern (40) versehen sind, die mit einer Vielzahl von Zahnrädern kämmen,
- das Fahrzeug eine elektrische Maschine (44) aufweist, die über ein Getriebemittel (48) mit der Primärwelle (28) in Wirkverbindung steht, wobei die elektrische Maschine (44) mechanisch von dem Motor (8) getrennt ist,
- wobei der Gangwechsel umfasst:
- einen ersten Schritt des Öffnens oder Ausrückens der Kupplung (24), um den Motor (8) von der Primärwelle (28) zu trennen,
- einen zweiten Schritt des Auswählens und Einlegens eines neuen Gangs, wobei die Kupplung (24) ausgerückt bleibt,
- einen dritten Schritt des Einrückens der Kupplung (24), um die Kurbelwelle (26) wieder mit der Primärwelle (28) des Automatik-Schaltgetriebes (16) zu verbinden,
**gekennzeichnet durch**
- Bereitstellen der Betätigung der elektrischen Maschine (44) während mindestens einem der Gangwechselschritte, um der Sekundärwelle (32) über die Primärwelle (28) ein Drehmoment zuzuführen, um der Verringerung der Fortbewegungsgeschwindigkeit des Fahrzeugs während des Gangwechsels entgegenzuwirken,
wobei der zweite Schritt des Gangwechsels unterteilt ist in einen Anfangsschritt, in dem die elektrische Maschine (44) der Primärwelle (28) ein Drehmoment bereitstellt, während der Motor (8) der Primärwelle (28) kein Drehmoment bereitstellt, einen Zwischenschritt, in dem Aktuatoren des Automatik-Schaltgetriebes (16) den zuvor eingelegten Gang lösen, den nächsten Gang auswählen und einlegen, wobei in dem Zwischenschritt die elektrische Maschine (44) kein Drehmoment an die Primärwelle (28) bereitstellt, und einen Endschritt, in dem die elektrische Maschine (44) Drehmoment an die Primärwelle (28) bereitstellt, während der Motor (8) kein Drehmoment an die Primärwelle (28) bereitstellt, wobei die Kupplung (24) ausgerückt ist.

2. Verfahren nach Anspruch 1, wobei die elektrische Maschine (44) während des ersten Gangwechselschritts ein Drehmoment an die Primärwelle (28) liefert, das zu dem Drehmoment hinzugefügt wird, das der Motor (8) während des Öffnungsschritts der Kupplung an die Primärwelle (28) zuführt.

3. Verfahren nach Anspruch 1 oder 2, wobei die elektrische Maschine (44) während des ersten Gangwechselschritts ein zunehmendes Drehmoment an die Primärwelle (28) liefert, das im Wesentlichen gleich der Verringerung des von dem Motor (8) an die Primärwelle (28) zugeführten Drehmoments ist, das durch das Öffnen der Kupplung (44) verursacht wird.

4. Verfahren nach einem der vorstehenden Ansprüche, wobei das von der elektrischen Maschine (44) während des ersten Gangwechselschritts an die Primärwelle (28) zugeführte Drehmoment umgekehrt proportional zu dem von dem Motor (8) übertragenen Drehmoment ist.

5. Verfahren nach einem der vorstehenden Ansprüche, wobei im ersten Schritt des Gangwechsels die Tendenzen des von dem Motor (8) und von der elektrischen Maschine (44) an die Primärwelle (28) zugeführten Drehmoments im Wesentlichen lineare Tendenzen sind.

6. Verfahren nach einem der vorstehenden Ansprüche, wobei am Ende des ersten Gangwechselschritts das von dem Motor (8) an die Primärwelle (28) zugeführte Drehmoment Null ist und das von der elektrischen Maschine (44) an die Primärwelle (28) zugeführte Drehmoment im Wesentlichen gleich dem von dem Motor (8) zu Beginn des ersten Schritts erzeugten Drehmoment ist.

7. Verfahren nach einem der vorstehenden Ansprüche, wobei die elektrische Maschine (44) zu Beginn und am Ende des Zwischenschritts der Primärwelle (28) ein Drehmoment zuführt, das im Wesentlichen gleich dem von dem Motor (8) zu Beginn des ersten Gangwechselschritts erzeugten Drehmoment ist.

8. Verfahren nach einem der vorstehenden Ansprüche, wobei während des dritten Gangwechselschritts die elektrische Maschine (44) ein Drehmoment an die Primärwelle (28) liefert, das zu dem Beitrag des von dem Motor (8) an die Primärwelle (28) zugeführten Drehmoments durch das Einrücken der Kupplung (24) addiert wird.

9. Verfahren nach einem der vorstehenden Ansprüche, wobei während des dritten Gangwechselschritts die elektrische Maschine (44) ein Drehmoment an die Primärwelle (28) liefert, das auf einen Wert sinkt, der im Wesentlichen gleich dem Anstieg des Beitrags des von dem Motor (8) an die Primärwelle (28) zugeführten Drehmoments aufgrund des Schließens der Kupplung (24) ist.

10. Verfahren nach einem der vorstehenden Ansprüche, wobei das von der elektrischen Maschine (44) während des dritten Gangwechselschritts an die Primärwelle (28) zugeführte Drehmoment umgekehrt proportional zu dem von dem Motor (8) übertragenen Drehmoment ist.

11. Verfahren nach einem der vorstehenden Ansprüche, wobei am Ende des dritten Gangwechselschritts das von der elektrischen Maschine (44) an die Primärwelle (28) zugeführte Drehmoment gleich Null ist und die von dem Motor (8) an die Primärwelle (28) zugeführte Leistung im Wesentlichen gleich der zu Beginn des ersten Schritts von diesem Motor gelieferten Leistung ist, abhängig von der Drehmomentanforderung des Benutzers.

12. Verfahren nach einem der vorstehenden Ansprüche, wobei die Entlade- und Anstiegskurven des von dem Motor (8) und von der elektrischen Maschine (44) auf die Primärgetriebewelle (28) übertragenen Drehmoments jeweils während des ersten und des dritten Gangwechselschritts im Wesentlichen symmetrisch zueinander sind.

13. Verfahren nach einem der vorstehenden Ansprüche, wobei die Brennkraftmaschine (8) mit einer Motorsteuereinheit (12) versehen ist, die von der Drehmomentanforderung des Benutzers abhängt, und das Automatik-Schaltgetriebe (16) mit einer Getriebesteuereinheit (20) versehen ist, wobei die Steuereinheiten (12, 20) miteinander in Wirkverbindung stehen, um die Betätigung des Motors (8), des Automatik-Schaltgetriebes (16) und der elektrischen Maschine (44) während des Gangwechsels zu synchronisieren.

14. Verfahren nach Anspruch 13, wobei die Motorsteuereinheit (12) während der Gangwechselschritte eine Unterbrechung oder eine Leistungserhöhung vornimmt, um die Primärwelle (28) mit dem von der Kupplung (24) übertragbaren Drehmoment bereitzustellen, und zwar in Abhängigkeit von der Anforderung durch den Benutzer, und dem Betriebszustand der Kupplung (24), wobei die Unterbrechung oder die Leistungserhöhung durch Einwirkung auf die Frühzündung eines oder mehrerer Zylinder der Brennkraftmaschine (8) und/oder durch Änderung der Ansaug- und/oder Ausstoßparameter eines oder mehrerer Zylinder der Brennkraftmaschine (8) erfolgt.

15. Verfahren nach einem der vorstehenden Ansprüche, wobei das Automatik-Schaltgetriebe (16) elektrische oder elektromechanische Aktuatoren aufweist, die den zuvor eingelegten Gang lösen, indem sie die Primärwelle (28) und die Sekundärwelle (32) voneinander trennen, den nächsten Gang auswählen und diesen einlegen, wobei die Primärwelle (28) und die Sekundärwelle (32) verbunden werden.

16. Verfahren nach einem der vorstehenden Ansprüche, wobei die elektrische Maschine (44), wenn kein Gangwechsel erfolgt, als Generator verwendet wird, der die kinetische Energie des Fahrzeugs rückgewinnt und eine Batterie der Brennkraftmaschine (8) und/oder elektrische Betriebsmittel des Fahrzeugs wieder auflädt.

17. Verfahren nach einem der vorstehenden Ansprüche, wobei die Getriebemittel (48) eine Kinematik oder eine Außenrotorlösung oder eine Hohlwellenlösung umfassen.

## Revendications

1. Procédé de gestion et de commande des phases de changement de vitesse d'un véhicule équipé d'une transmission manuelle automatisée (16) :
- ledit véhicule présentant un moteur endothermique (8) avec vilebrequin (26) associé, et une transmission manuelle automatisée (16) présentant un embrayage, un arbre primaire (28) raccordé de manière fonctionnelle à l'embrayage (24), et un arbre secondaire (32) raccordé de manière fonctionnelle aux roues motrices (36) du véhicule, les arbres primaire et secondaire (28, 32) étant dotés d'engrenages (40) s'engrenant les uns avec les autres en une pluralité d'engrenages,
- le véhicule présentant une machine électrique (44) raccordée de manière fonctionnelle à l'arbre primaire (28) par des moyens de transmission (48), ladite machine électrique (44) étant séparée mécaniquement du moteur (8),
- le changement de vitesse comprenant :
- une première étape d'ouverture de l'embrayage (24) ou de débrayage, de manière à déconnecter le moteur (8) de l'arbre primaire (28),
- une deuxième étape de sélection et de mise en prise d'un nouvel engrenage, en gardant l'embrayage (24) ouvert,
- une troisième étape de mise en prise de l'embrayage (24) pour reconnecter le vilebrequin (26) avec l'arbre primaire (28) de la transmission manuelle automatisée (16),
**caractérisé par** l'étape consistant à
- permettre l'actionnement de la machine électrique (44) pendant au moins l'une desdites étapes de changement vitesse, de manière à fournir un couple à l'arbre secondaire (32), par l'intermédiaire de l'arbre primaire (28), pour compenser la réduction de vitesse de progression du véhicule pendant ledit changement de vitesse,
dans lequel la deuxième étape du changement de vitesse est divisée en une étape initiale, dans laquelle la machine électrique (44) fournit un couple à l'arbre primaire (28) alors que le moteur (8) ne fournit pas de couple à l'arbre primaire (28), une étape intermédiaire dans laquelle des actionneurs de la transmission manuelle automatisée (16) libèrent le précédent engrenage en prise, sélectionnent et mettent en prise l'engrenage suivant, où, dans ladite étape intermédiaire, la machine électrique (44) ne fournit pas de couple à l'arbre primaire (28), et une étape finale dans laquelle la machine électrique (44) fournit un couple à l'arbre primaire (28) alors que le moteur (8) ne fournit pas de couple à l'arbre primaire (28), l'embrayage (24) étant libéré.

2. Procédé selon la revendication 1, dans lequel, pendant la première étape de changement de vitesse, la machine électrique (44) délivre à l'arbre primaire (28) un couple qui est ajouté au couple délivré par le moteur (8) à l'arbre primaire (28), pendant l'étape d'ouverture de l'embrayage.

3. Procédé selon la revendication 1 ou 2, dans lequel, pendant la première étape de changement de vitesse, la machine électrique (44) délivre à l'arbre primaire (28) un couple croissant, sensiblement égal à la réduction du couple fourni par le moteur (8) à l'arbre primaire (28) du fait de l'ouverture de l'embrayage (44).

4. Procédé selon l'une quelconque des revendications précédentes, dans lequel le couple délivré à l'arbre primaire (28) par la machine électrique (44) pendant la première étape du changement de vitesse est inversement proportionnel au couple transmis par le moteur (8).

5. Procédé selon l'une quelconque des revendications précédentes, dans lequel, dans la première étape du changement de vitesse, les tendances du couple délivré à l'arbre primaire (28) par le moteur (8) et par la machine électrique (44) sont des tendances sensiblement linéaires.

6. Procédé selon l'une quelconque des revendications précédentes, dans lequel, à la fin de la première étape du changement de vitesse, le couple délivré par le moteur (8) à l'arbre primaire (28) est nul, et le couple délivré par la machine électrique (44) à l'arbre primaire (28) est sensiblement égal au couple généré par le moteur (8) au début de la première étape.

7. Procédé selon l'une quelconque des revendications précédentes, dans lequel, au début et à la fin de l'étape intermédiaire, la machine électrique (44) délivre à l'arbre primaire (28) un couple sensiblement égal au couple généré par le moteur (8) au début de la première étape du changement de vitesse.

8. Procédé selon l'une quelconque des revendications précédentes, dans lequel, pendant la troisième étape du changement de vitesse, la machine électrique (44) délivre à l'arbre primaire (28) un couple qui s'ajoute à la contribution du couple délivré par le moteur (8) à l'arbre primaire (28), par la mise en prise de l'embrayage (24).

9. Procédé selon l'une quelconque des revendications précédentes, dans lequel, pendant la troisième étape du changement de vitesse, la machine électrique (44) délivre à l'arbre primaire (28) un couple qui décroît jusqu'à une valeur sensiblement égale à l'augmentation de la contribution du couple délivré par le moteur (8) à l'arbre primaire (28), en raison de la fermeture de l'embrayage (24).

10. Procédé selon l'une quelconque des revendications précédentes, dans lequel le couple délivré à l'arbre primaire (28) par la machine électrique (44) pendant la troisième étape du changement de vitesse est inversement proportionnel au couple transmis par le moteur (8).

11. Procédé selon l'une quelconque des revendications précédentes, dans lequel, à la fin de la troisième étape du changement de vitesse, le couple délivré par la machine électrique (44) à l'arbre primaire (28) est nul, et la puissance fournie par le moteur (8) à l'arbre primaire (28) est sensiblement égale à la puissance délivrée par celui-ci au début de la première étape, en fonction de la demande de couple de l'utilisateur.

12. Procédé selon l'une quelconque des revendications précédentes, dans lequel les courbes de réduction et d'augmentation du couple transmis à l'arbre de transmission principal (28) par le moteur (8) et la machine électrique (44), respectivement, pendant les première et troisième étapes du changement de vitesse, sont sensiblement symétriques l'une par rapport à l'autre.

13. Procédé selon l'une quelconque des revendications précédentes, dans lequel le moteur endothermique (8) est doté d'une unité de commande de moteur (12) dépendant de la demande de couple effectuée par l'utilisateur, la transmission manuelle automatisée (16) est dotée d'une unité de commande de transmission (20), dans lequel lesdites unités de commande (12, 20) sont raccordées de manière fonctionnelle l'une à l'autre pour synchroniser l'actionnement du moteur (8), de la transmission manuelle automatisée (16) et de la machine électrique (44) pendant le changement de vitesse.

14. Procédé selon la revendication 13, dans lequel, pendant les étapes de changement de vitesse, l'unité de commande de moteur (12) effectue une réduction ou une augmentation de la puissance afin de fournir à l'arbre primaire (28) le couple pouvant être transmis par l'embrayage (24) en fonction de la demande effectuée par l'utilisateur, et de l'état de travail dudit embrayage (24), ladite réduction ou augmentation de puissance étant effectuée en agissant sur l'avance à l'allumage d'un ou de plusieurs cylindres du moteur endothermique (8), et/ou sur une modification des paramètres de l'aspiration et/ou de décharge d'un ou de plusieurs cylindres du moteur endothermique (8).

15. Procédé selon l'une quelconque des revendications précédentes, dans lequel la transmission manuelle automatisée (16) comprend des actionneurs électriques ou électromécaniques qui libèrent le précédent engrenage en prise, en déconnectant l'arbre primaire (28) et l'arbre secondaire (32) l'un de l'autre, sélectionnent l'engrenage suivant et le mettent en prise, connectant l'arbre primaire (28) et l'arbre secondaire (32).

16. Procédé selon l'une quelconque des revendications précédentes, dans lequel la machine électrique (44), lorsqu'aucun changement de vitesse n'est effectué, sert de générateur, récupérant de l'énergie cinétique du véhicule et rechargeant une batterie du moteur endothermique (8) et/ou un quelconque système électrique du véhicule.

17. Procédé selon l'une quelconque des revendications précédentes, dans lequel lesdits moyens de transmission (48) comprennent un système cinématique, ou une solution à rotor externe ou une solution à arbre creux.
